# EUROPEAN PATENT APPLICATION

(11) **EP 4 316 919 A1**
(43) Date of publication of application: **07.02.2024**
(21) Application number: 22189105.4
(22) Date of filing: 05.08.2022
(51) Int. Cl.: B60R 19/12

(54) **SIDE EXTENSION FOR CRASH MANAGEMENT SYSTEM**

(71) Applicant: Constellium Singen GmbH, 78224 Singen (DE)
(72) Inventor: FRITZ, Klaus, 78315 RADOLFZELL (DE); SCHMID, Thomas, 78315 RADOLFZELL (DE); WIEDEMANN, Jochen, 78315 RADOLFZELL (DE)
(74) Representative: Constellium - Propriété Industrielle

(57) **Abstract**

A crash management system for a vehicle comprising an assembly of bumper cross members with at least a first bumper cross member and a second bumper cross member, said first bumper cross member and second bumper cross member being substantially vertically spaced wherein said first bumper cross member is located above said second bumper cross member, wherein said first bumper cross member comprises a front wall, a rear wall and a top and a bottom cross walls connecting the front wall and the rear wall for the formation of a closed cross section and wherein said second bumper cross member comprises a front wall, a rear wall and a top and a bottom cross walls connecting the front wall and the rear wall for the formation of a closed cross section, and at least one connecting means to attach the first bumper cross member and the second bumper cross member to the motor vehicle, and a two essentially side extensions positioned on each side of the crash management system wherein said side extension comprises, a first vertical segment, a first horizontal segment and a second horizontal segments wherein said side extension comprises at least one opening and wherein said first horizontal segment overlaps the first bumper cross member and said second horizontal segment overlaps the second bumper cross member.

## Description

### FIELD OF THE INVENTION

The invention relates to a crash management system comprising an assembly of bumper cross members each connected to the vehicle structure and side extensions on each side of the crash management system, which are superimposed on the outer face of the bumper cross members and that is subjected to bend in the event of a deformation of the end portion of the crash management system following a collision of the vehicle.

### BACKGROUND

A common motor vehicle comprises a body structure which intends to create a frame able to resist to impacts. In particular, the body structure comprises a left longitudinal support and a right longitudinal support, on the front end of which a crash management system is disposed. Left and right longitudinal supports are also called left and right longitudinal beams or left and right-side rails.

The term crash management system is generally used to describe the structural module consisting of one or more bumper cross member(s) and the related attachments which connect the bumper cross member(s) to the left and right-side rails of the vehicle. The main goal of a crash management system is to prevent damages following a choc between a vehicle and an obstacle or between two vehicles.

The crash management system should be able to absorb energy at the start of a collision and to guide the remaining crash forces into the rest of the body structure in the form of impact energy. A common crash management system includes one or more bumper cross member (also called bumper beam), typically extending laterally across the front or rear end of a vehicle, and absorbers also called shock absorbers, crash boxes or deformation elements. In the event of a vehicle crash, a rear-end collision or an impact with an object, bumper cross member and absorber have a specific task. The bumper cross member has sufficient rigidity to prevent a corresponding object or motor vehicle from penetrating too far into the front or end area and the absorbers convert energy coming from the crash into deformation energy and thereby reduce the impact energy which is afterwards transfer to the rest of the vehicle.

In order to ensure the safety of passengers, vehicles are subjected to a wide variety of tests and evaluations. Such tests are usually mandated by government regulations and insurance certifications. Concerning the vehicle resistance to an impact, several crash tests may be performed, like for example overlap impact, with different speeds and different overlapping of the parties implied in the impact over one another or MPDB (Mobile Progressive Deformable Barrier) using a mobile barrier with a progressive deforming element in order to reproduce a car-to-car collision.

JP2022036512 A1 describes a vehicle body front structure including an upper bumper beam provided a lower bumper beam in a lower region of the upper bumper beam and a bumper reinforcement having a connecting part coupled to an end part of the upper bumper beam and an end part of the lower bumper beam, and a protruding part extending outward from the connecting part in the vehicle width direction. The protruding part permits to improve the rigidity of the front structure but not the penetration of the obstacle in the vehicle.

DE102020130039 B3 describes a bumper arrangement comprising one or two crossmembers extended in such a way that in case of side impact it strikes, with a rounded contour, against the wheel located behind. This system is made of several panels of steel material assembly together providing complex solution to implement in a crash management system.

DE202021103263 U1 and DE202021103264 U1 describe a bumper arrangement comprising one or two crossmembers extended in such a way that in case of side impact it strikes, with a rounded contour, against the wheel located behind. This system is made from one extruded element in which parts are cut off providing a heavy and a complex solution to be implemented in a crash management system.

EP3858683 A1 describes a connecting element attached to a first bumper beam and a second bumper beam of a crash management system, that is subjected to control the crash behaviour of the crash management system in case of a car-to-car collision. The connecting element is an extruded element fixed on the end of both beams providing a heavy and a complex solution to implement in a crash management system.

There is a need to propose a simple crash management system with a constant barrier deformation without any deep impact into the vehicle, able to absorb energy of impact by deformation while avoiding fracture during the impact and high damages.

### SUMMARY OF THE INVENTION

The present invention proposes a solution to enhance the ability of a crash management system to absorb impact energy and to generate a resistance to limit the damage of the vehicle side without any deep impact into the vehicle and secure the passengers.

The present invention relates to a crash management system comprising an assembly of bumper cross members and a side extension placed at each side of the crash management system able to be deformed into a flat vertical surface in case of car-to-car collision avoiding an inhomogeneous intrusion into the other vehicle or a deformable barrier.

### DESCRIPTION OF THE INVENTION

In the description, the X, Y and Z axis corresponds to the local referential of the vehicle. X corresponds to the longitudinal direction of the vehicle, Y the transverse direction, perpendicular to X, and Z the vertical direction to the surface formed by the X and Y axis.

The problem to be solved by the invention is to improve the performance of the known crash management systems, avoiding making the system heavier and occupying the smallest possible volume, as the available space is limited and cluttered by all other elements necessary for the proper functioning of the vehicle.

The solution proposed by the invention is a simple and flexible concept, which consists in the addition of one element at each side of the crash management system. To this end, the invention concerns a crash management system for a vehicle comprising an assembly of bumper cross members with at least a first bumper cross member and a second bumper cross member, said first bumper cross member and second bumper cross member being substantially vertically spaced wherein said first bumper cross member is located above said second bumper cross member, wherein said first bumper cross member comprises a front wall, a rear wall and a top and a bottom cross walls connecting the front wall and the rear wall for the formation of a closed cross section and wherein said second bumper cross member comprises a front wall, a rear wall and a top and a bottom cross walls connecting the front wall and the rear wall for the formation of a closed cross section, and at least one connecting means to attach the first bumper cross member and the second bumper cross member to the motor vehicle, and two essentially symmetrical side extensions positioned on each side of the crash management system wherein said side extension comprises, a first vertical segment, a first horizontal segment and a second horizontal segments wherein said side extension comprises at least one opening and wherein said first horizontal segment overlaps the first bumper cross member and said second horizontal segment overlaps the second bumper cross member.

The crash management system of the invention has a longitudinal direction X a transverse direction Y perpendicular to the longitudinal direction X and a vertical direction Z perpendicular to the plane defined by said directions X and Y. The first bumper cross member and the second bumper cross member, are globally oriented in said transverse direction Y. The first bumper cross member is located above the second bumper cross member. The term "substantially vertically spaced" aims to define that the first and the second bumpers are directly in contact which each other but are spaced a certain distance apart in the Z direction depending on the type of crash management system.

The system described above makes it possible to extend the crash management system in the transverse direction Y in such a way that in case of impact the side extension may be deformed in a flat surface. In case of impact, the side extension is shifted backwards to the longitudinal direction of the motor vehicle and thus its first vertical segment hits another component of the vehicle like for example a wheel housing, a wheel, or a longitudinal beam. The side extension may be deformed providing an additional way for the energy of impact to be absorbed by vehicle components instead of damaging the interior of the vehicle. In the scope of a MPDB test, the deformation into a flat surface leads to a good deformation behaviour of the crash management system and to a homogeneous intrusion into the deformable barrier.

According to the invention the first horizontal segment overlaps the first bumper cross member and the second horizontal segment overlaps the second bumper cross member, which permits to achieve an efficient connection between the side extension and the assembly of bumper cross members. These overlapping areas are used to join the side extension to the first and the second bumper cross member. Preferably the side extension of the invention is joined to the first and second bumper cross member by welding, and/or gluing, and/or riveting and/or screwing. Advantageously, the side extension connects the first bumper cross member and the second bumper cross member. In one embodiment of the invention the side extension is superimposed on the front wall of the first bumper cross member and on the front wall of the second bumper cross member by the first and the second horizontal segments. In another embodiment of the invention the side extension is superimposed on the rear wall of the first bumper cross member and on the rear wall of the second bumper cross member by the first and the second horizontal segments.

In one more embodiment of the invention the side extension could be superimposed on the front wall of the first bumper cross member and on the rear wall of the second bumper cross member, in another embodiment of the invention the side extension could be superimposed on the rear wall of the first bumper cross member and on the front wall of the second bumper cross member.

According to the invention, the side extension comprises an opening which permits to reduce the weight of said side extension and allows the passage of air in order to cool down the vehicle. Preferably the opening is a large opening corresponding to at least 5%, preferably at least 10% and more preferably at least 20% of the total area of the side extension. The total area of the side extension is defined as the area of the smallest convex surface which encompass the side extension. In a preferred embodiment of the invention, the opening is a central opening.

According to one embodiment, the side extension is a monolithic element in one piece and in one material. A monolithic structural element refers in the context of the present invention to a structural member that has been obtained from one single piece and one material, with no assembly, such as riveting, welding, adhesive bonding, with another part. It has the advantage to permit to adapt the design of the side extension to the crash management system in which it is comprised. This makes it possible to use identical bumper cross members for different crash management system just by adapting the design of the side extension.

According to an alternative embodiment, the side extension is made of at least three parts, a central part and at least two peripheral parts which overlap the first bumper cross member and/or the second bumper cross member. In this alternative embodiment the side extension preferably ends at one or both bumper beams extremity and the overlapping and connecting parts are additional parts.

According to one embodiment, additionally to the first vertical segment and the two horizontal segments, the side extension comprises a second vertical segment on the opposite side of the first vertical segment. In such embodiment, the second vertical segment connects the first and the second horizontal segment between the areas where the two horizontal segments overlap with the two bumper cross members creating therefore with the first vertical segment and the central opening a frame shape component. Advantageously, the second vertical segment permits to transfer energy in Z and in X direction when an impact occurs. Typically the two vertical segments and two horizontal segments define a hole.

According to another embodiment, the second vertical segment comprises openings for connecting device units and/or a bracket of the pedestrian protection cross member. Device unit is for example a controllable cooling air inlet unit.

According to one embodiment, the side extension comprises one or more flanges extending the first vertical segment the first and the second horizontal segment in the longitudinal direction X. Advantageously, in the areas where the two horizontal segments overlap with the two bumper cross members, one flange overlaps at least partially the top cross wall of the first bumper cross member and/or one flange overlaps at least partially the bottom cross wall of the second bumper cross member in order to improve the solidity of the joining and/or of the total crash management system structure. In another advantageous embodiment one or more flanges are positioned at the edges of the central opening of the side extension. Adding a flange permits to increase the stiffness of the side extension.

According to one embodiment, the side extension comprises reinforcing beads. Advantageously, reinforcing beads are positioned vertically on the first and/or second vertical segment and/or horizontally on the first and/or on the second horizontal segment. The presence of reinforcing beads permits to improves the stiffness of the side extension. The number of reinforcing beads depend on the stiffness to be achieved for the crash management system.

According to another embodiment the side extension is curved around a vertical axis parallel to direction Z.. Advantageously the side extension curvature permits to adapt the line of curvature of the crash management system according to the desired crash reactions with regard to the energy dissipation. A strong curvature in the line of curvature of the bumper cross member is limited by the bending process. Advantageously, the side extension of the invention permits to realize stronger curvatures if needed.

According to the invention, the side extension is formed from a sheet of metal, or from polymer, or from fiber reinforced polymer, for example carbon fiber or glassfiber reinforced polymer. Preferably the side extension is formed from a sheet made of an aluminium alloy. More preferably, the side extension is formed from an alloy of the Aluminum Association 5xxx family.

According to one embodiment, the side extension is formed by extrusion, or roll forming or stamping or casting or injection molding, preferably by stamping.

According to one particular embodiment, other additional elements may be added to the end side of the bumper assembly. Preferably, these other elements are positioned on the external sides of the crash management system in the transversal direction Y to enlarge it and to extend the crash behaviour of the crash management system of the invention, between the first and second bumper cross members and the side extensions. In such case, the side extensions overlap the additional element.

According to one embodiment, the first and the second bumper cross members are made of steel or of an aluminium alloy. Preferably the first and the second bumper cross member are made of an aluminium alloy.

According to one embodiment, the first and the second bumper cross members are hollow profiles with at least one chamber. Depending on the crash management system, the first and/or second bumper cross members have several chambers.

According to one embodiment, the first bumper cross member or the second bumper cross member is an extruded hollow profile. Preferably, the first and the second cross member are extruded hollow profiles.

According to one embodiment, the first and the second cross member are made of steel or an aluminium alloy. Preferably the first and the second cross member are made of an aluminium alloy.

According to the one embodiment, the connecting means are crash boxes.

### DESCRIPTION OF THE DRAWING:

Figure 1 is front view of one crash management system according to the invention
Figure 2 is a rear view of the crash management system of figure 1
Figure 3 is a front view of the side extension of figure 1
Figure 4 is a rear view of the side extension of figure 3
Figure 5 is a bird's eye view from the rear of a side extension according to another embodiment of the invention
   of figure 3
Figure 6 is front view of one crash management system according to another embodiment of the invention

List of references:
1, 1': Crash management system
4: Fixing plate
7, 8: connecting means
10: First bumper cross member
11: First bumper cross member front wall
12: First bumper cross member rear wall
13: First bumper cross member top cross wall
14: First bumper cross member bottom cross wall
20: Second bumper cross member
21: Second bumper cross member front wall
22: Second bumper cross member rear wall
23: Second bumper cross member top cross wall
24: Second bumper cross member bottom cross wall
30, 30', 30": Side extension
31, 31': central opening
32, 32', 32": first vertical segment
33, 33": second vertical segment
34, 34', 34", 35, 35', 35", 36, 36', 36": flange
37, 37": reinforcing bead
38, 38', 38": first horizontal segment
39, 39', 39": second horizontal segment
40, : opening for a bracket of the pedestrian protection cross member
41, 41': opening for connection of device units
50: flange

### DETAILED DESCRIPTION OF THE INVENTION

Throughout all the figures, same or corresponding elements may generally be indicated by same reference numerals. These depicted embodiments are to be understood as illustrative of the invention and not as limiting in any way.

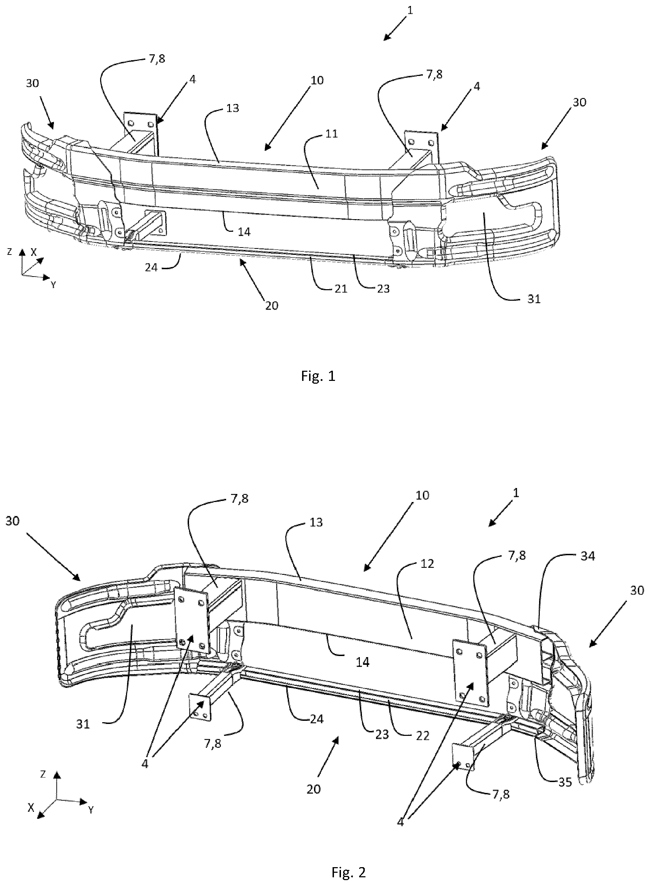

Figure 1 and figure 2 represent respectively a front view and a rear view of one crash management system 1 according to one embodiment of the invention. The crash management system 1 has a curved line. The crash management system 1 comprises an assembly of bumper cross members with a first bumper cross member 10 above a second bumper cross member 20, crash boxes playing the role of connecting means 7 or 8 to attach the first bumper cross member 10 and the second bumper cross member 20 to the motor vehicle via fixing plates 4, and a side extension 30 positioned on each side of the crash management system 1 and curved in the longitudinal direction X around a vertical axis parallel to direction Z.

The first and second bumper cross member 10 and 20 are globally oriented in the transverse direction Y, and vertically spaced. The first bumper cross member 10 comprises a front wall 11, a rear wall 12 and a top cross wall 13 and a bottom cross wall 14. The cross walls 13 and 14 connect the front wall 11 and the rear wall 12 in order to form a closed cross section. The second bumper cross member 20 comprises a front wall 21, a rear wall 22, a top cross wall 23 and a bottom cross wall 24. The cross walls 23 and 24 connect the front wall 21 and the rear wall 22 in order to form a closed cross section.

The side extension 30 extends the crash management system 1 in the transversal direction Y and in a longitudinal direction X because of its curvature. The side extension 30 in one piece and comprises a central opening 31. The side extension 30 overlaps the front walls 11 and 21 of the first and second bumper cross member 10 and 20. Both side extensions 30 are made in a symmetrical way to be joined at each side of the bumper cross member assembly.

The side extension 30 comprises flanges 34 and 35 extending in the longitudinal direction X of the vehicle. In the area where the side extension 30 overlaps the front walls 11 and 21 of the first and second bumper cross member 10 and 20, the flange 34 overlaps partially the top cross wall 13 of the first bumper cross member 10 and the 35 overlaps partially the bottom cross wall 24 of the second bumper cross member 20. When the side extension is joined to the bumper cross member 10 and 20, the side in contact with the bumper cross member 10 and 20 is the inner side of the side extension 30 and the opposite side is the outer side.

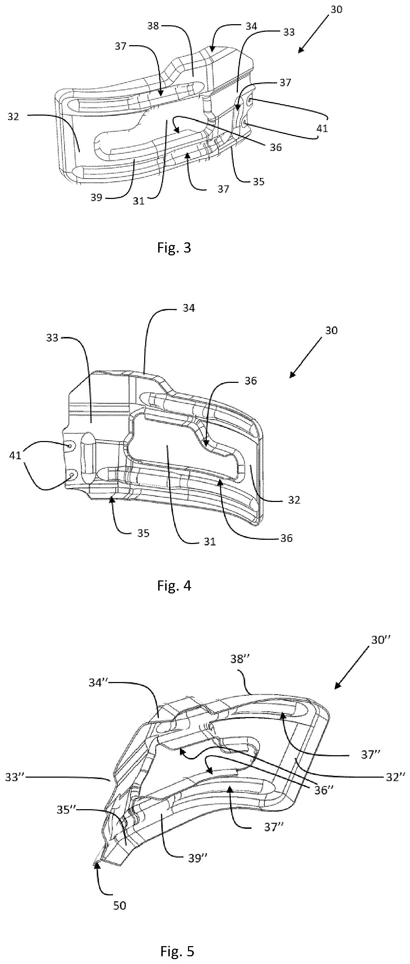

Figure 3 and figure 4 represents respectively a front view and a rear view of the side extension of figure 1. The side extension 30 comprises a first vertical segment 32, a second vertical segment 33, a first horizontal segment 38 and a second horizontal segment 39 creating therefore a frame shape component with the central opening 31. Both vertical segments 32 and 33 are positioned opposite one to each other on the internal and external sides of the side extension 30. The first horizontal segment 38 connects the first vertical segment 32 and the second vertical segment 33 on the top of the side extension 30. The second horizontal segment 39 connects the first vertical segment 32 and the second vertical segment 33 on the bottom of the side extension 30. Unlike the inner side which is flat, the outer side of the side extension 30 is bent backwards to avoid a protruding angle on the edges. Flanges 36 extend the first and the second horizontal segments 39 and 40 through the central opening 31 to the rear of the side extension 30. Reinforcing beads 37 of different sizes and shapes are positioned on the first and second horizontal sections 32 and 33 but also on the first vertical segment 39. Openings 41 are present to permit the connection of device units such as for example controllable cooling air inlet unit. Other openings 40 that are not shown in the figures may be present to permit the connection of a bracket of the pedestrian protection cross member (not shown).

Figure 5 represents a bird's eye view from the rear of one side extension 30" according to the invention. Similarly, to the side extension 30, the side extension 30" includes a central opening 31", vertical and horizontals segments 32", 33", 38" and 39", flanges 34", 35" and 36", and reinforcing beads 37". The side extension 30" comprises also a flange 50 extending the second horizontal segment 39" in downwards the vertical direction.

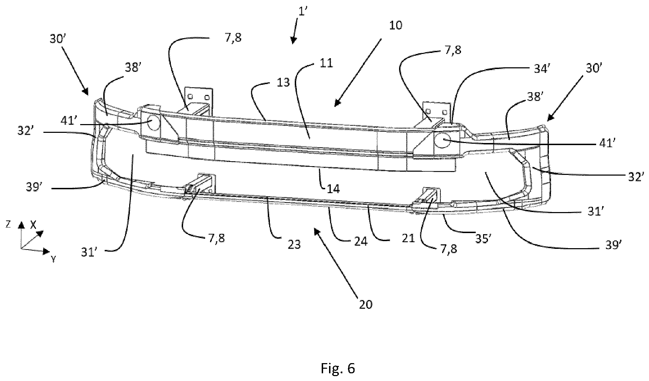

Figure 6 represents front view of one crash management system 1' according to the invention. The crash management system 1' has a curved line. The crash management system 1' comprises an assembly of bumper cross members with a first bumper cross member 10 above a second bumper cross member 20, crash boxes playing the role of connecting means 7 or 8 to attach the first bumper cross member 10 and the second bumper cross member 20 to the motor vehicle via fixing plates 4, and side extensions 30' positioned on each side of the crash management system 1' and curved in the longitudinal direction X.

The side extension 30' extends the crash management system 1' in the transversal direction Y and in a longitudinal direction X because of its curvature. The side extension 30' is in one piece and comprises a central opening 31'. The side extension 30' overlaps the front walls 11 and 21 of the first and second bumper cross member 10 and 20. Both side extensions 30' are made in a symmetrical way to be joined at each side of the bumper cross member assembly.

The side extension 30' comprises flanges 34' and 35' extending in the longitudinal direction X of the vehicle. In the area where the side extension 30' overlaps the front walls 11 and 21 of the first and second bumper cross member 10 and 20, the flange 34' overlaps partially the top cross wall 13 of the first bumper cross member 10 and the flange 35' overlaps partially the bottom cross wall 24 of the second bumper cross member 20.

The side extension 30' comprises a first vertical segment 32', a first horizontal segment 38' and a second horizontal segment 39' creating therefore a U shape component with the central opening 31'. The first horizontal segment 38' connects the first vertical segment 32' and the second vertical segment 33' on the top of the side extension 30'. Flanges 36' extends the first and the second horizontal segments 38' and 39' through the central opening 31' to the rear of the side extension 30. Openings 41' are presents.

## Claims

1. Crash management system (1, 1') for a vehicle having a longitudinal direction X a transverse direction Y perpendicular to the longitudinal direction X and a vertical direction Z perpendicular to the plane defined by said directions X and Y, comprising
a. an assembly of bumper cross members with at least a first bumper cross member (10) and a second bumper cross member (20), globally oriented in said transverse direction Y, said first bumper cross member (10) and second bumper cross member (20) being substantially vertically spaced wherein said first bumper cross member (10) is located above said second bumper cross member (20), wherein said first bumper cross member (10) comprises a front wall (11), a rear wall (12) and a top and a bottom cross walls (13, 14) connecting the front wall (11) and the rear wall (12) for the formation of a closed cross section and wherein said second bumper cross member (20) comprises a front wall (21), a rear wall (22) and a top and a bottom cross walls (23, 24) connecting the front wall (21) and the rear wall (22) for the formation of a closed cross section;
b. at least one connecting means (7, 8) to attach the first bumper cross member (10) and the second bumper cross member (20) to the motor vehicle;
c. two essentially symmetrical side extensions (30, 30', 30") positioned on each side of the crash management system (1, 1') wherein said side extension (30, 30', 30") comprise, a first vertical segment (32, 32', 32"), a first horizontal segment (38, 38', 38") and a second horizontal segment (39, 39', 39");
**characterized in that**
said side extension (30, 30', 30") comprises at least one opening (31, 31') and said first horizontal segment (38, 38', 38") overlaps the first bumper cross member (10) and said second vertical segment (39, 39', 39") overlaps the second bumper cross member (20).

2. Crash management system (1, 1') according to claim1 **characterized in that** said side extension (30, 30', 30") is a monolithic element in one piece and in one material.

3. Crash management system (1, 1') according to claim1 **characterized in that** said side extension (30, 30', 30") is made of at least three parts, a central part and at least two peripheral parts which overlap the first bumper cross member (10) and/or the second bumper cross member (20).

4. Crash management system (1, 1') according to any one of the claims 1 to 3 **characterized in that** said side extension (30, 30', 30") comprises flanges (34, 34', 34", 35, 35', 35", 36, 36', 36") wherein said flange (34, 34', 34") overlaps partially the top cross wall (13) of the first bumper cross member (10) and wherein said flange (35, 35', 35") overlaps partially the bottom cross wall (24) of the second bumper cross member (20).

5. Crash management system (1, 1') according to any one of the claims 1 to 4 **characterized in that** said side extension (30, 30', 30") comprises reinforcing beads (37, 37").

6. Crash management system (1, 1') according to any one of claim 1 to 5 **characterized in that** said opening (31, 31') is a central opening

7. Crash management system (1, 1') according to any one of the claims 1 to 6 **characterized in that** said side extension (30, 30', 30") is curved around a vertical axis parallel to direction Z.

8. Crash management system (1, 1') according to any one of the claims 1 to 7 characterized additionally to the first vertical segment (32, 32') and the two horizontal segments (38, 38', 39, 39'), the side extension comprises a second vertical segment (33, 33') on the opposite side of the first vertical segment (32, 32').

9. Crash management system (1, 1') according to any one of the claims 1 to 8 **characterized in that** said second vertical segment (33, 33') of said side extension (30, 30') comprises openings (40, 41, 41') for connecting device units and/or a bracket of the pedestrian protection cross member.

10. Crash management system (1, 1') according to any one of the claims 1 to 9 **characterized in that** said side extension (30, 30', 30") is joined to the first and second cross beam (10, 20) by welding, and/or gluing, and/or riveting and/or screwing.

11. Crash management system (1, 1') according to any one of the claims 1 to 10 **characterized in that** said side extension (30, 30', 30") is formed from a sheet of metal, or from polymer, or from fiber reinforced polymer, for example carbon fiber or fiberglass reinforced polymer.

12. Crash management system (1, 1') according to any one of the claims 1 to 11 **characterized in that** said side extension (30, 30', 30") is formed from a sheet made of an aluminium alloy preferably an alloy from the 5xxx family.

13. Crash management system (1, 1') according to any one of the claims 1 to 12 **characterized in that** said side extension (30, 30', 30") is formed by roll forming or stamping or casting or injection molding.

14. Crash management system (1, 1') according to any one of the claims 1 to 13 **characterized in that** said connecting means (7, 8) are crash boxes.

15. Crash management system (1, 1') according to any one of the claims 1 to 14 **characterized in that** the first and/or the second bumper cross members (10, 20) are hollow profiles with at least one chamber, preferably extruded hollow profiles with at least one chamber.
